# NEUE EUROPÄISCHE PATENTSCHRIFT

(11) **EP 1 963 020 B2**
(45) Veröffentlichungstag und Bekanntmachung des Hinweises auf die Entscheidung über den Einspruch: **03.12.2025**
(45) Hinweis auf die Patenterteilung: 15.09.2021
(21) Anmeldenummer: 06819714.4
(22) Anmeldetag: 23.11.2006
(51) Int. Cl.: C04B 24/26, C04B 28/02, C04B 40/00, C04B 103/52

(54) **VERWENDUNG VON KAMMPOLYMEREN ALS MAHLHILFSMITTEL FÜR ZEMENTHALTIGE ZUBEREITUNGEN**
USE OF COMB POLYMERS AS A GRINDING AGENT FOR PREPARATIONS CONTAINING CEMENT
UTILISATION DE POLYMÈRES EN PEIGNE EN TANT QU'AUXILIAIRES DE MOUTURE POUR DES PRÉPARATIONS CONTENANT DU CIMENT

(30) Priorität: 02.12.2005 DE 102005057896
(43) Veröffentlichungstag der Anmeldung: 03.09.2008
(73) Patentinhaber: Construction Research & Technology GmbH, 83308 Trostberg (DE)
(72) Erfinder: PAKUSCH, Joachim, 67346 Speyer (DE); BECKER, Stefan, 68167 Mannheim (DE); GÖTZ, Thomas, 76774 Leimersheim (DE); DYLLICK-BRENZINGER, Rainer, 67346 Speyer (DE); GULDEN, Rolf, 67227 Frankenthal (DE)
(74) Vertreter: Lorenz, Klaus Uwe
(86) Internationale Anmeldenummer: PCT/EP2006/068834
(87) Internationale Veröffentlichungsnummer: WO 2007/063030

(56) Entgegenhaltungen:
- EP-A1- 0 560 602
- EP-A1- 1 260 535
- EP-A1- 1 260 535
- WO-A1-2005/123621
- WO-A1-2005/123621
- DE-A1- 19 834 173
- GB-A- 2 309 693
- GB-A- 2 309 693
- US-A- 4 471 100
- US-A- 4 946 904
- US-B1- 6 641 661

## Beschreibung

Die vorliegende Erfindung betrifft die Verwendung von Kammpolymeren, die an einem Kohlenstoffrückgrat Poly-C₂-C₄-alkylenether-Seitenketten A und funktionelle Gruppen B, welche bei pH > 12 in Form anionischer Gruppen vorliegen, tragen, sowie die Salze derartiger Kammpolymere als Mahlhilfsmittel für zementhaltige Zubereitungen.

Zement ist ein hydraulisches Bindemittel. Mit Wasser angemacht ergibt Zement Zementleim, der durch Hydratation erstarrt und erhärtet und der auch nach dem Erhärten unter Wasser fest und raumbeständig bleibt.

Zement besteht aus dem Hauptbestandteil Portlandzementklinker, den Nebenbestandteilen Hüttensand, Puzzolan, Flugasche, Kalkstein und/oder Füller sowie einer calciumsulfathaltigen Komponente und sogenannten Zementzusatzmitteln. Die Zementbestandteile müssen hinsichtlich ihrer Zusammensetzung statistisch betrachtet homogen sein. Eine hohe Gleichmäßigkeit aller Zementeigenschaften muss durch eine kontinuierliche Herstellung in großen Massenströmen, insbesondere durch adäquate Mahl- und Homogenisierungsverfahren erzielt werden.

Trotz zahlreicher Entwicklungen in der Mahltechnologie wird der größte Teil des Zements immer noch in Rohr-Kugelmühlen gemahlen, bei denen dem Effekt von Mahlhilfsmitteln eine besondere Bedeutung zukommt.

Mahlhilfsmittel haben insbesondere die Aufgabe bei der Zementklinker- oder Kalksteinmahlung eine höhere Mahlfeinheit des Mahlgutes zu ermöglichen.

Mahlhilfsmittel wirken durch Ummantelung der zu Agglomeration neigenden Partikel mit monomolekularen Schichten und führen damit zu einer Neutralisation der Oberflächenladungen. Physikalisch gesprochen liefern die Mahlhilfsmittel rasch Ladungsträger, die zum Absättigen der während des Bruchs der Klinkerpartikel auf den Bruchflächen entstehenden Ladungen zur Verfügung stehen und dadurch die Agglomerationsneigung reduzieren. Außerdem werden Mahlhilfsmittel auf den Bruchflächen der noch nicht separierten Körner absorbiert und verhindern deren Rückvereinigung unter Einwirkung von Temperatur und Druck.

In der Regel wird das Zement-Rohmaterial trocken vermahlen. Bei der trockenen Aufbereitung werden die Rohmaterialkomponenten über Dosiereinrichtungen einer Mühle in einem bestimmten Mischungsverhältnis aufgegeben und zu Rohmehl feingemahlen. Während des Mahlvorgangs kommt es zu einer Erwärmung des Mahlgutes, wobei die Temperatur des aus dem Mahlaggregat entnommenen Mahlgutes 80 bis 120 °C betragen kann. Typische Mahlaggregate sind Rohrmühlen (Kugelmühlen), aber auch Walzmühlen.

Die Wirksamkeit bekannter Mahlhilfsmittel ist sehr unterschiedlich. Zu den bekannten Mahlhilfsmitteln zählen Triethanolamin, verschiedene Carbonsäuren und deren Salze, beispielsweise Octadecansäure oder deren Natrium-Salz.

Die EP-A 331 308 beschreibt Kammpolymere zur Dispergierung von Zement, die eine monoethylenisch ungesättigte Carbonsäure, eine monoethylenisch ungesättigte Sulfonsäure und einen Ester eines Poly-C₂-C₃-alkylenglykolmono-C₁-C₃-alkylethers einpolymerisiert enthalten.

Die EP-A 560 602 wiederum beschreibt die Verwendung von Kammpolymeren, die einen Alkenylether eines Poly-C₂-C₁₈-alkylenglykolmono-C₁-C₄-alkylethers und Maleinsäure bzw. Maleinsäureanhydrid einpolymerisiert enthalten, als Additive für Beton.

Aus der EP-A 753 488 wiederum ist die Verwendung von Kammpolymeren, welche monoethylenisch ungesättigte Carbonsäuren und Ester monoethylenisch ungesättigter Carbonsäuren von Polyoxy-C₂-C₄-alkylenmono-C₁-C₄-alkylether einpolymerisiert enthalten und die eine bestimmte Molekulargewichtsverteilung aufweisen, als Dispergiermittel für Zement bekannt. Ähnliche Polymere werden zu diesem Zweck in der EP-A 792 850 beschrieben.

Die EP-A 725 044 wiederum beschreibt die Verwendung von Kammpolymeren aus monoethylenisch ungesättigten Monocarbonsäuren und Estern monoethylenisch ungesättigter Carbonsäuren mit Polyoxyethylenmono-C₁-C₅-alkylethern in hydraulisch abbindenden Massen auf Basis einer Mischung aus Zement und wasserfreiem Gips.

Die EP-A 799 807 wiederum beschreibt die Verwendung von Kammpolymeren auf Basis monoethylenisch ungesättigter Monocarbonsäuren und Alkylpolyalkylenglykol-mono(meth)acrylsäureestern, wobei Letztere durch einen Umesterungsprozess erhältlich sind, als Dispergatoren für Zement.

Die US 5,728,207 und US 5,840,114 beschreiben die Verwendung von Kammpolymeren, die durch Polymermodifizierung von Polymeren, die cyclischen Anhydrid-Gruppen aufweisen, mit Alkylpolyalkylenetheraminen erhalten wurden, als Additive für Zementhaltige Zubereitungen.

Aus der WO 98/28353 sind Kammpolymere mit einem Kohlenstoffrückgrat bekannt, das Alkylpolyalkylenethergruppen und Carboxylatgruppen, trägt. Die Kammpolymere können sowohl durch Modifizierung von Carboxylatgruppen enthaltenden Polymeren mit Polyalkylenethern als auch durch Copolymerisation geeigneter, Alkylpolyalkylenether-Gruppen enthaltender Monomere mit ethylenisch ungesättigten Carbonsäuren hergestellt werden.

Die EP 976 695 beschreibt Zinn (II) Sulfat als Mahlhilfsmittel.

Die Zugabemengen, bezogen auf das Mahlgut liegen bei den bekannten Mahlhilfsmitteln typischerweise zwischen 0,05 und 0,2 Gew.-% oder deutlich darüber.

Mahlhilfsmittel bedürfen einer Optimierung der folgenden Kenngrößen: Verhinderung von Anbackungen im Mahlaggregat, Erzielung einer möglichst hohen Mahlfeinheit, beziehungsweise großen spezifischen Oberfläche des Mahlgutes (Feinheit nach Blaine), Verbesserung der Fließfähigkeit des Mahlgutes, Homogenisierung des Mahlgutes, Auflösung von Agglomeraten des Mahlgutes sowie eine Reduzierung der Zugabemenge des Mahlhilfsmittels.

EP 1 260 535 A1 offenbart wasserlösliche Polymerisate von Estern aus Acrylsäure und Alkylpolyalkylenglykolen, erhältlich durch azeotrope Veresterung einer Mischung von Acrylsäure und Alkylpolyalkylenglykol im Molverhältnis von 2 bis 3 :1 in Gegenwart eines organischen Lösungsmittels, das mit Wasser ein Azeotrop bildet, zu mindestens 85 Gew.-%, bezogen auf das Alkylpolyalkylenglykol, und anschließende radikalische Polymerisation des bei der Veresterung erhaltenen Gemisches in wässrigem Medium, wobei man das organische Lösungsmittel während der Polymerisation azeotrop aus dem Reaktionsgemisch abdestilliert und das abdestillierte Wasser in das Gemisch zurückführt oder durch Zufuhr von frischem Wasser ersetzt sowie Herstellung und Verwendung dieser Polymerisate als Zusatz zu zementösen Systemen.

GB 2 309 693 A1 offenbart ein Mahlhilfamittel für Zementklinker, welches einen Styrol-Maleinsäureanhydrid-Copolymer-Superverflüssiger (SMA) umfasst. Der SMA ist vorzugsweise ein Typ mit auf Polyoxyalkylen basierenden Seitenketten.

Der vorliegenden Erfindung liegt somit die Aufgabe zu Grunde, Mahlhilfsmittel für zementhaltige Zubereitungen bereitzustellen, die die oben aufgeführten Kenngrößen erfüllen.

Es wurde überraschenderweise gefunden, dass diese Aufgabe durch Kammpolymere mit einem Kohlenstoffrückgrat gelöst wird, die am Polymerrückgrat Polyethergruppen der im Folgenden definierten Formel A und funktionelle Gruppen B, welche bei pH > 12 in Form anionischer Gruppen vorliegen, tragen.

Dementsprechend betrifft die vorliegende Erfindung die Verwendung von Kammpolymeren die ein Kohlenstoffrückgrat aufweisen, das Polyethergruppen der Formel A

*-U-(C(O))ₖ-X-(Alk-O)ₙ-W A

worin
- *: die Bindungsstelle an das Kohlenstoffrückgrat des Kammpolymers anzeigt,
- U: für eine chemische Bindung steht,
- X: Sauerstoff oder eine Gruppe NR bedeutet,
- k: 0 ist,
- n: für eine ganze Zahl steht, deren Mittelwert, bezogen auf das Kammpolymer im Bereich von 5 bis 300 liegt,
- Alk: für C₂-C₄-Alkylen steht, wobei Alk innerhalb der Gruppe (Alk-O)ₙ gleich oder verschieden sein kann,
- W: einen Wasserstoff-, einen C₁-C₆-Alkyl- oder einen Arylrest bedeutet oder die Gruppe Y-Z bedeutet, wobei
- Y: für eine lineare oder verzweigte Alkylengruppe mit 2 bis 8 C-Atomen steht, die einen Phenylring tragen kann,
- Z: für einen über Stickstoff gebundenen 5- bis 10-gliedrigen Stickstoffheterocyclus steht, der als Ringglieder, neben dem Stickstoffatom und neben Kohlenstoffatomen, 1, 2 oder 3 zusätzliche Heteroatome, ausgewählt unter Sauerstoff, Stickstoff und Schwefel aufweisen kann, wobei die Stickstoffringlieder eine Gruppe R' aufweisen können, und wobei 1 oder 2 Kohlenstoffringglieder als Carbonylgruppe vorliegen können,
- R: für Wasserstoff, C1-C4-Alkyl oder Benzyl steht, und
- R': für Wasserstoff, C1-C4-Alkyl oder Benzyl steht;

sowie funktionelle Gruppen B, die bei pH >12 in Form anionischer Gruppen vorliegen, trägt,
und ihrer Salze als Mahlhilfsmittel in zementhaltigen Zubereitungen.

Derartige Kammpolymere sind neu, wenn der Mittelwert von n, bezogen auf das Kammpolymer, im Bereich von 10 bis 300 liegt und im Mittel 90 mol-% der Einheiten Alk-O in der Gruppe (Alk-O)ₙ für CH₂-CH₂-O stehen.

Demnach betrifft die vorliegende Erfindung außerdem Kammpolymere, die ein Kohlenstoffrückgrat aufweisen, das Polyethergruppen der allgemeinen Formel A sowie funktionelle Gruppen B, die bei pH > 12 in Form anionischer Gruppen vorliegen, trägt, wobei in Formel A die Variablen *, U, X, k, Alk, Y, Z, R und R' die zuvor genannten Bedeutungen aufweisen und n für eine ganze Zahl steht, deren Mittelwert, bezogen auf das Kammpolymer im Bereich von 10 bis 300 liegt und worin im Mittel wenigstens 90 mol-% der Einheiten Alk-O in der Gruppe (Alk-O)ₙ für CH₂-CH₂-O stehen.

Die erfindungsgemäßen Kammpolymere können auch in Kombination mit bekannten Mahlhilfsmitteln eingesetzt werden, beispielsweise Triethanolamin oder verschiedene Carbonsäuren beziehungsweise deren Salze wie Octadecansäure oder deren Salze.

Die Konfektionierung der Kammpolymere kann sowohl in pulverförmiger Form als auch in Lösung erfolgen.

Zementhaltige Zubereitungen im Sinne der vorliegenden Erfindung sind anorganische, in der Regel mineralischer Substanzen, die, wenn sie mit Wasser angemacht werden, insbesondere versteht man darunter hydraulische Bindemittel, wie Kalk und insbesondere Zement, einschließlich latent hydraulischer Bindemittel, wie Hochofenschlacken. Die erfindungsgemäßen Kammpolymere eignen sich insbesondere als Mahlhilfsmittel von Zubereitungen hydraulischer Bindemittel, ganz besonders als Mahlhilfsmittel für zementhaltige Zubereitungen.

Hier und im Folgenden steht C₂-C₄-Alkylen für eine lineare oder verzweigte Alkandiylgruppe, die 2 bis 4 C-Atome aufweist, insbesondere für eine 1,2-Ethandiyl-Gruppe, die ein oder zwei Methylgruppen oder eine Ethylgruppe tragen kann, d. h. für 1,2-Ethandiyl, 1,2-Propandiyl, 1,2-Butandiyl, 1,1-Dimethylethan-1,2-diyl oder 1,2-Dimethylethan-1,2-diyl.

C₁-C₈-Alkylen steht für eine lineare oder verzweigte Alkandiylgruppe, die 1 bis 8 und insbesondere 1 bis 4 C-Atome aufweist, z. B. für CH₂, 1,1-Ethandiyl, 1,2-Ethandiyl, 1,1-Propandiyl, 1,3-Propandiyl, 2,2-Propandiyl, 1,2-Propandiyl, 1,1-Butandiyl, 1,2-Butandiyl, 1,3-Butandiyl, 1,4-Butandiyl, 2,2-Butandiyl, 1,1-Dimethylethan-1,2-diyl oder 1,2-Dimethylethan-1,2-diyl.

C₁-C₄- bzw. C₁-C₆-Alkyl steht für eine lineare oder verzweigte Alkylgruppe, die 1 bis 4 C-Atome aufweist, z. B. für Methyl, Ethyl, n-Propyl, Isopropyl, n-Butyl, 2-Butyl, 2-Methylpropan-1-yl oder tert.-Butyl. C₁-C₁₀-Alkyl steht für eine lineare oder verzweigte Alkylgruppe, die 1 bis 10 C-Atome aufweist, z. B. für C₁-C₄-Alkyl, wie zuvor genannt, sowie für Pentyl, Hexyl, 1-Methylpentyl, 2-Methylpentyl, Heptyl, Octyl, 1-Methylheptyl, 2-Methylheptyl, 2,4,4-Trimethylpentan-2-yl, 2-Ethylhexyl, 1-Ethylhexyl, Nonyl, Isononyl, Decyl, 1-Methylnonyl, 2-Propylheptyl und dergleichen.

C₁-C₄-Alkoxy steht für eine lineare oder verzweigte Alkylgruppe, die über ein Sauerstoffatom gebunden ist und die 1 bis 4 C-Atome aufweist, z. B. für Methoxy, Ethoxy, n-Propyloxy, Isopropyloxy, n-Butyloxy, 2-Butyloxy, 2-Methylpropan-1-yloxy oder tert.-Butoxy. C₁-C₁₀-Alkoxy steht für eine lineare oder verzweigte Alkylgruppe, die über ein Sauerstoffatom gebunden ist und die 1 bis 10 C-Atome aufweist, z. B. Für C₁-C₄-Alkoxy, wie zuvor genannt, sowie für Pentyloxy, Hexyloxy, 1-Methylpentyloxy, 2-Methylpentyloxy, Heptyloxy, Octyloxy, 1-Methylheptyloxy, 2-Methylheptyloxy, 2,4,4-Trimethylpentan-2-yloxy, 2-Ethylhexyloxy, 1-Ethylhexyloxy, Nonyloxy, Isononyl-oxy, Decyloxy, 1-Methylnonyloxy, 2-Propylheptyloxy und dergleichen.

Im Hinblick auf die erfindungsgemäße Verwendung hat es sich als vorteilhaft erwiesen, wenn die mittlere Anzahl an Wiederholungseinheiten Alk-O in den Gruppen (Alk-O)ₙ, d. h. der Mittelwert von n in Formel A, bezogen auf das Kammpolymer, wenigstens 10, insbesondere wenigstens 20 und speziell wenigstens 50 beträgt und einen Wert von 250, insbesondere 200 und speziell 150 nicht überschreitet. Vorzugsweise liegt der Wert im Bereich von 10 bis 250, insbesondere im Bereich von 20 bis 200 und speziell im Bereich von 50 bis 150. Bei dem Mittelwert von n bzw. der mittleren Anzahl an Wiederholungseinheiten Alk-O handelt es sich um das Zahlenmittel, bezogen auf das Kammpolymer.

In der Gruppe (Alk-O)ₙ können die Alkylenteile der einzelnen Wiederholungseinheiten Alk-O gleich oder verschieden sein. Insbesondere bevorzugt steht Alk-O für 1,2-Ethandiyl oder Mischungen von 1,2-Ethandiyl mit 1,2-Propandiyl. Sofern die Gruppen (Alk-O)ₙ voneinander verschiedene Einheiten Alk-O aufweisen, können diese statistisch oder blockweise angeordnet sein, wobei eine blockweise Anordnung bevorzugt ist. Insbesondere handelt es sich bei derjenigen Gruppe Alk-O, die an X gebunden ist, um eine Gruppe der Formel CH₂CH₂O.

Weiterhin hat es sich als vorteilhaft erwiesen, wenn wenigstens 50 mol-%, insbesondere wenigstens 80 mol-%, besonders bevorzugt 90 mol-% und insbesondere alle Gruppen Alk-O für CH₂-CH₂-O stehen. Bei diesen %-Angaben handelt es sich um das Zahlenmittel, bezogen auf die Gesamtmenge an Kammpolymer.

Sofern die Gruppe (Alk-O)ₙ verschiedene Wiederholungseinheiten Alk-O aufweist, hat es sich als vorteilhaft erwiesen, wenn im Mittel wenigstens 50 mol-%, z. B. 50 bis 99 mol-%, insbesondere wenigstens 80 mol-%, z. B. 80 bis 99 mol-%, und speziell wenigstens 90 mol-%, z. B. 90 bis 98 mol-% der Gruppen Alk-O für CH₂-CH₂-O stehen. Hierunter sind solche Mischungen bevorzugt, in denen die verbleibenden Wiederholungseinheiten Alk-O für CH(CH₃)-CH₂-O stehen.

Die Gruppe Z in Formel A steht vorzugsweise für einen 5- oder 6-gliedrigen Stickstoffheterocyclus, welcher neben dem an Y gebundenen Stickstoffatom und den Kohlenstoffringgliedern ein unter O, S, N, einer Gruppe NR ausgewähltes Ringglied und/oder eine Carbonylgruppe als Ringglied aufweist. In der Gruppe NR hat R die zuvor genannten Bedeutungen und steht insbesondere für Wasserstoff oder Methyl. Hierunter sind solche Heterocyclen bevorzugt, die ein unter O, N oder eine Gruppe NR ausgewähltes Ringglied und/oder eine Carbonylgruppe als Ringglied aufweisen. Beispiele für bevorzugte Reste Z sind Pyrrolidon-1-yl, Morpholin-4-yl, Piperazin-1-yl, Piperidon-1-yl, Morpholin-2-on-4-yl, Morpholin-3-on-4-yl, Piperazin-1-yl, 4-Methylpiperazin-1-yl, Imidazolin-2-on-1-yl, 3-Methylimidazolin-2-on-1-yl und Imidazol-1-yl. Hierunter sind insbesondere Morpholin-1-yl und Pyrrolidon-1-yl bevorzugt.

Weiterhin hat es sich als vorteilhaft erwiesen, wenn Y in Formel A für C₂-C₄-Alkylen und insbesondere für 1,2-Ethandiyl oder 1,3-Propandiyl steht.

U steht für eine chemische Bindung.

Erfindungsgemäß steht k für 0.

In Formel A steht X vorzugsweise für O oder NH und insbesondere für O.

Insbesondere weisen in Formel A die Variablen U, k, X, Y und Z sowie die Variable n gemeinsam die als bevorzugt genannten Bedeutungen auf.

Die in den erfindungsgemäß verwendeten Kammpolymeren vorhandenen Gruppen B liegen typischerweise bei pH-Werten oberhalb 12 in Form anionischer Gruppen, d. h. in deprotonierter Form vor. Beispiele für solche Gruppen sind Carboxylat (COOH bzw. COO⁻), Sulfonat (SO₃H bzw. SO₃⁻), Phosphonat (PO₃H₂ bzw. PO₃H⁻ oder PO₃²⁻). Vorzugsweise sind wenigstens 50 mol-%, insbesondere wenigstens 80 mol-% der Gruppen B Carboxylatgruppen.

In einer bevorzugten Ausführungsform der Erfindung handelt es sich bei der Gruppe B im wesentlichen (d.h. zu wenigstens 95 mol-%, speziell wenigstens 99 mol-%) oder ausschließlich um Carboxylatgruppen. In einer anderen Ausführungsform der Erfindung weisen die Kammpolymere wenigstens zwei verschiedene funktionelle Gruppen B auf, wobei in dieser Ausführungsform vorzugsweise 50 bis 99 mol-%, insbesondere 80 bis 99 mol-% der funktionellen Gruppen B Carboxylatgruppen und die übrigen 1 bis 50 mol-%, insbesondere 1 bis 20 mol-%, Sulfonatgruppen sind.

Die funktionellen Gruppen B können direkt oder über einen Spacer an das Kohlenstoffrückgrat der Polymerkette gebunden sein. Typische Spacer sind C₁-C₄-Alkandiyl, Phenylen sowie Gruppen der Formel

*-C(O)-X'-Alk'-,

worin X' für O, NH oder N(C₁-C₄-alkyl) steht, Alk' für C₂-C₄-Alkylen, insbesondere für 1,2-Ethandiyl, 1,3-Propandiyl, 1,2-Propandiyl oder 1-Methyl-1,2-propandiyl steht und * die Bindungsstelle des Spacers an das Polymerrückgrat bedeutet. In einer bevorzugten Ausführungsform der Erfindung ist die Gruppe B unmittelbar, d. h. über eine Einfachbindung, an das Kohlenstoffrückgrat des Kammpolymeren gebunden.

Weiterhin kann das Kammpolymer neben den vorgenannten Gruppen der Formel A und den funktionellen Gruppen B auch Gruppen der Formel C

*-U'-(C(O))ₚ-X"-(Alk)-O)_{q}-R^{a} C

worin
U' die für U genannten Bedeutungen aufweist, p für 0 oder 1 steht, X" die für X angegebenen Bedeutungen aufweist, Alk" die zuvor für Alk angegebenen Bedeutungen aufweist, q für eine ganze Zahl steht, deren Mittelwert, bezogen auf das Kammpolymer im Bereich von 2 bis 300, insbesondere im Bereich von 10 bis 250, besonders bevorzugt im Bereich von 20 bis 200 und speziell im Bereich von 50 bis 150 liegt (Zahlenmittel) und R^{a} ausgewählt ist unter Wasserstoff, C₁-C₁₀-Alkyl, C₁-C₁₀-Alkylcarbonyl, Benzyl oder Benzoyl. In Formel C steht p insbesondere für 1. U' steht insbesondere für eine chemische Bindung. X" steht insbesondere für Sauerstoff. R^{a} steht insbesondere für C₁-C₄-Alkyl und speziell für Methyl. Bezüglich der bevorzugten Bedeutungen von Alk" gilt das zuvor für Alk Gesagte analog.

Grundsätzlich können die Polyethergruppen A aber auch die Polyethergruppen C innerhalb des Kammpolymers bezüglich der Anzahl der Wiederholungseinheiten n bzw. q in den Gruppen (Alk-O)ₙ bzw. (Alk"-O)_{q} gleich oder verschieden sein, wobei zu berücksichtigen ist, dass die Gruppen A und C bzw. die Gruppen (Alk-O)ₙ bzw. (Alk"-O)_{q} eine Molekulargewichtsverteilung aufweisen und dementsprechend n und q Mittelwerte (Zahlenmittel) dieser Molekulargewichtsverteilungen repräsentieren. Der Begriff "gleich" bedeutet daher, dass die Molekulargewichtsverteilung der Gruppen A bzw. C jeweils ein Maximum aufweisen. Der Begriff "verschieden" bedeutet dementsprechend, dass die Molekulargewichtsverteilung der Gruppen A bzw. C mehreren überlagerten Verteilungen entspricht und dementsprechend mehrere Maxima aufweisen. Kammpolymere, worin die Molekulargewichtsverteilungen der Gruppen A oder, wenn vorhanden, die Molekulargewichtsverteilungen der Gruppen A von denen der Gruppen C verschieden sind, sind bevorzugt. Insbesondere sind solche Kammpolymere bevorzugt, wo die jeweils einem Maximum zuzuordnenden Zahlenmittel des Molekulargewichts um wenigstens 130 Dalton und insbesondere wenigstens 440 Dalton voneinander abweichen. Dementsprechend sind Kammpolymere bevorzugt, die wenigstens zwei, z. B. 2, 3, 4, 5 oder 6 Typen unterschiedlicher Gruppen A aufweisen (im Folgenden Gruppen A1 und A2 bzw. A1, A2 ... Ai; i eine ganze Zahl, z. B. 3, 4, 5 oder 6), worin die jeweiligen Mittelwerte n(A1) und n(A2) bzw. n(Ai) um einen Wert von wenigstens 3 und insbesondere um wenigstens 10 unterscheiden. Dementsprechend sind auch Kammpolymer mit Gruppen der Formel A und der Formel C bevorzugt, worin die Mittelwerte von n und q sich um einen Wert von wenigstens 3 und insbesondere um wenigstens 10 unterscheiden.

In den erfindungsgemäß zur Anwendung kommenden Kammpolymeren liegen die Polyethergruppen der Formel A und die funktionellen Gruppen B typischerweise in einem Molverhältnis A:B im Bereich von 2:1 bis 1:20, häufig im Bereich von 1,5:1 bis 1:15, insbesondere im Bereich von 1:1 bis 1:10 und speziell im Bereich von 1:1,1 bis 1:8 vor (gemittelt über die Gesamtmenge an Kammpolymeren). Sofern das Kammpolymer Polyethergruppen der Formel C aufweist, liegt das Molverhältnis von Polyethergruppen der Formel A und C zu den funktionellen Gruppen B, d. h. das Molverhältnis (A+C):B typischerweise im Bereich von 2:1 bis 1:20, häufig im Bereich von 1,5:1 bis 1:15, insbesondere im Bereich von 1:1 bis 1:10 und speziell im Bereich von 1:1,1 bis 1:1 (gemittelt über die Gesamtmenge an Kammpolymeren).

Neben den vorgenannten Gruppen der Formel A, den funktionellen Gruppen B und den gegebenenfalls vorhandenen Gruppen C kann das Kammpolymer in untergeordnetem Maße auch funktionelle Gruppen C' am Kohlenstoffrückgrat tragen. Hierzu zählen insbesondere C₁-C₈-Alkoxycarbonylgruppen, in denen der Alkoxyrest ein oder mehrere Hydroxygruppen tragen kann, Nitrilgruppen und Gruppen der Formel Z wie vorstehend definiert.

Der Anteil der funktionellen Gruppen C' wird, bezogen auf die Gesamtmenge der funktionellen Gruppen A, B, gegebenenfalls C und C' vorzugsweise 30 mol-%, insbesondere 20 mol-% nicht überschreiten und liegt, sofern vorhanden, typischerweise im Bereich von 1 bis 30 mol-% und insbesondere im Bereich von 2 bis 20 mol-%. In einer bevorzugten Ausführungsform weist das Kammpolymer keine oder weniger als 2 mol-%, insbesondere weniger als 1 mol-% funktionelle Gruppen C' auf.

In einer bevorzugten Ausführungsform weist das Kammpolymer 5 bis 80 mol-%, insbesondere 10 bis 60 mol-%, jeweils bezogen auf die Gesamtmenge der funktionellen Gruppen A, B, C und gegebenenfalls C' Gruppen der Formel C auf. In dieser Ausführungsform liegt das Molverhältnis der Seitenketten A zu den Gruppen C, d. h. das Molverhältnis A:C vorzugsweise im Bereich von 1:10 bis 20:1, insbesondere im Bereich von 1:2 bis 10:1. In einer anderen bevorzugten Ausführungsform der Erfindung weist das Kammpolymer keine oder weniger als 5 mol-%, insbesondere weniger als 1 mol-%, Gruppen der Formel C' auf, jeweils bezogen auf die Gesamtmenge der Gruppen A, B, C und C'.

Außerdem kann das Kammpolymer am Kohlenstoffrückgrat auch Kohlenwasserstoffreste aufweise, z. B. C₁-C₄-Alkylgruppen oder Phenylgruppen. In einer bevorzugten Ausführungsform der Erfindung weist das Kohlenstoffrückgrat C₁-C₄-Alkylgruppen, insbesondere Methylgruppen an wenigstens jedem 4. C-Atom der Polymerkette auf.

Weiterhin hat es sich als vorteilhaft erwiesen, wenn im Mittel (Zahlenmittel) wenigstens jedes 4. C-Atom des Polymerrückgrats und insbesondere wenigstens jedes 3. C-Atom eine Gruppe der Formeln A oder gegebenenfalls C oder eine funktionelle Gruppe B trägt. Ferner hat es sich als vorteilhaft erwiesen, wenn im Mittel (Zahlenmittel) zwischen zwei durch A, B oder gegebenenfalls C substituierten Kohlenstoffatomen des Polymerrückgrats wenigstens ein Kohlenstoffatom angeordnet ist, das nicht durch eine Gruppe A, B oder gegebenenfalls C substituiert ist.

Das zahlenmittlere Molekulargewichte (M_{N}) der Kammpolymere liegt in der Regel im Bereich von 1000 bis 200000. Im Hinblick auf die Verwendung der Kammpolymere sind solche mit einem zahlenmittleren Molekulargewicht von 5000 bis 100000 bevorzugt. Das zahlenmittlere Molekulargewicht M_{N} kann in üblicher Weise durch Gelpermeationschromatographie, wie in den Beispielen erläutert, bestimmt werden. Die K-Werte der erfindungsgemäß erhältlichen Copolymerisate, bestimmt nach der unten angegebenen Methode, liegen in der Regel im Bereich von 10 bis 100, vorzugsweise im Bereich von 15 bis 80 und insbesondere im Bereich von 20 bis 60.

Die Kammpolymere können in Form der freien Säure oder in Form ihrer Salze eingesetzt werden, wobei in der Salzform die Gruppen B teilweise oder vollständig neutralisiert vorliegen können. Sofern die Kammpolymere in Form der Salze eingesetzt werden, weisen Sie aus Gründen der Elektroneutralität Kationen als Gegenionen auf. Geeignete Kationen sind Alkalimetallkationen wie Na⁺ und K⁺, Erdalkalimetallkationen wie Mg⁺⁺ und Ca⁺⁺, und Ammoniumionen, wie NH₄⁺, [NR^{b}R^{c}R^{d}R^{e}]⁺, worin R^{b} für C₁-C₄-Alkyl oder Hydroxy-C₂-C₄-alkyl steht und die Reste R^{c}, R^{d} und R^{e} unabhängig voneinander ausgewählt sind unter Wasserstoff, C₁-C₄-Alkyl und Hydroxy-C₂-C₄-alkyl. Bevorzugte Gegenionen sind die Alkalimetallkationen, insbesondere Na⁺ und K⁺.

Die Herstellung der erfindungsgemäßen Kammpolymere kann in Analogie zu bekannten Verfahren zur Herstellung derartiger Kammpolymere erfolgen, z. B. in Analogie zu den Verfahren, wie sie im Eingangs zitierten Stand der Technik beschrieben werden sowie in Analogie zu den in WO 01/40337, WO 01/40338, WO 01/72853 oder WO 02/50160 beschriebenen Verfahren, auf deren Offenbarung hiermit Bezug genommen wird.

Geeignete Herstellungsverfahren sind insbesondere:
i) Copolymerisation ethylenisch ungesättigter Monomere M, umfassend
   a) neutrale monoethylenisch ungesättigte Monomere M1, die eine oder zwei Gruppen der Formel A aufweisen, und
   b) monoethylenisch ungesättigte Monomere M2, die eine oder zwei funktionelle Gruppe B aufweisen,
ii) Homo- oder Copolymerisation ethylenisch ungesättigter Monomere M, umfassend
   a) monoethylenisch ungesättigte Monomere M3, die eine Gruppe der Formel A und eine funktionelle Gruppe B aufweisen, und gegebenenfalls
   b) monoethylenisch ungesättigte Monomere M2, die eine oder zwei funktionelle Gruppe B aufweisen.

Die Herstellungsverfahren i) und ii) führen alle zu erfindungsgemäßen Kammpolymeren, wobei die Struktur der dabei erhältlichen Kammpolymere naturgemäß von der jeweils gewählten Herstellungsmethode und der Menge und Art der eingesetzten Ausgangsprodukten in an sich bekannter Weise abhängt. So hängt beispielsweise bei den nach den Herstellungsmethoden i) und ii) erhältlichen Kammpolymeren die Art und Menge der Seitenketten A bzw. der funktionellen Gruppen B von der Art und der relativen Menge der eingesetzten Monomere M1 und M2 bzw. M1 und ggf. M3 in an sich bekannter Weise ab. Das Molekulargewicht der Kammpolymere wiederum lässt sich bei den Herstellungsmethoden i) und ii) durch die bei der Polymerisation gewählten Reaktionsbedingungen, z. B. durch den eingesetzten Initiator, gegebenenfalls eingesetzte Regler, die Temperatur, das Reaktionsmedium, Konzentration der Monomere etc. in an sich bekannter Weise steuern.

Erfindungsgemäß bevorzugt sind die nach der Methode i) erhältlichen Kammpolymere, die somit einen besonders bevorzugten Gegenstand der Erfindung bilden.

Im Herstellungsverfahren i) bestimmen Art und Menge der Monomere M die Art und Anzahl der Seitenketten der Formel A.
und die Salze dieser Monomere, insbesondere deren Alkalimetallsalze.

Als Monomere M1 kommen Vinylether von Alkoholen der Formel HO-(Alk-O)ₙ-Y-Z, worin n, Alk, Y und Z die zuvor genannten Bedeutungen aufweisen, in Betracht.

Zu den Monomeren M2 zählen:

| | |
|---|---|
| M2a | monoethylenisch ungesättigte Mono- und Dicarbonsäuren mit 3 bzw. 4 bis 8 C-Atomen wie Acrylsäure, Methacrylsäure, Crotonsäure, Isocrotonsäure, Maleinsäure, Fumarsäure und Itaconsäure. |
| M2b | monoethylenisch ungesättigte Sulfonsäuren mit vorzugsweise 2 bis 10 C-Atomen und deren Salze, insbesondere deren Alkalimetallsalze wie Vinylsulfonsäure, Allylsulfonsäure, Methallylsulfonsäure, Styrolsulfonsäure, 2-Acryloxyethansulfonsäure, 2-Acrylamido-2-methylpropansulfonsäure, sowie |
| M2b | monoethylenisch ungesättigte Phosphonsäuren mit vorzugsweise 2 bis 10 C-Atomen wie Vinylphosphonsäure, Allylphosphonsäure, 2-Acryloxyethanphosphonsäure, 2-Acrylamido-2-methylpropanphosphonsäure, |
| M2d | Halbester monoethylenisch ungesättigter Dicarbonsäuren mit 4 bis 8 C-Atomen, insbesondere Halbester der Maleinsäure, Fumarsäure und Itaconsäure mit C₁-C₁₀-Alkanolen, insbesondere mit C₁-C₄-Alkanolen, z. B. die Monomethyl-, Monoethyl- oder Monobutylester dieser Säuren sowie die Monoester dieser Säuren mit Alkoholen der Formel HO(Alk"-O)_{q}-R^{a}, worin q, Alk" und R^{a} die zuvor genannten Bedeutungen aufweisen, |

und die Salze dieser Monomere, insbesondere deren Alkalimetallsalze.

Bevorzugte Monomere M2 umfassen zu wenigstens 50 mol-%, insbesondere wenigstens 70 mol-%, bezogen auf die Gesamtmenge der Monomere M2, monoethylenisch ungesättigte Mono- und Dicarbonsäuren mit 3 bzw. 4 bis 8 C-Atomen, und hierunter besonders bevorzugt Acrylsäure und Methacrylsäure. In einer bevorzugten Ausführungsform sind die Monomere M2 ausgewählt unter monoethylenisch ungesättigte Mono- und Dicarbonsäuren mit 3 bzw. 4 bis 8 C-Atomen, insbesondere unter Acrylsäure und Methacrylsäure. In einer anderen Ausführungsform der Erfindung umfassen die Monomere M2 50 bis 99 mol-% , insbesondere 70 bis 95 mol-%, bezogen auf die Gesamtmenge der Monomere M2, monoethylenisch ungesättigte Mono- und Dicarbonsäuren mit 3 bzw. 4 bis 8 C-Atomen, und hierunter besonders bevorzugt Acrylsäure und Methacrylsäure, sowie 1 bis 50 mol-% , insbesondere 5 bis 35 mol-%, bezogen auf die Gesamtmenge der Monomere M2, monoethylenisch ungesättigte Sulfonsäuren mit vorzugsweise 2 bis 10 C-Atomen.

Zu den Monomeren M3 zählen insbesondere Halbester monoethylenisch ungesättigter C₄-C₈-Dicarbonsäuren mit Alkoholen der Formel HO-(Alk-O)ₙ-Y-Z, worin n, Alk, Y und Z die zuvor genannten Bedeutungen aufweisen, speziell die Halbester der Maleinsäure, der Fumarsäure und der Itaconsäure.

Daneben können die Monomere M weitere Monomere M4 und M5 umfassen.

Monomere M4 sind monoethylenisch ungesättigte Monomere, die eine oder zwei Gruppen der Formel C und gegebenenfalls eine funktionelle Gruppe B aufweisen. Hierzu zählen Vinyl-, Allyl und Methallylether von Alkoholen der Formel HO(Alk"-O)_{q}-R^{a}, worin q, Alk" und R^{a} die zuvor genannten Bedeutungen aufweisen, weiterhin die Ester dieser Alkohole von monoethylenisch ungesättigten Mono-C₃-C₈-carbonsäuren sowie die Halb- und Diester dieser Alkohole mit monoethylenisch ungesättigten Di-C₄-C₈-carbonsäuren. Bevorzugte Monomere M4 sind Ester monoethylenisch ungesättigter Mono-C₃-C₈-carbonsäuren, insbesondere der Acrylsäure und der Methacrylsäure, mit Alkoholen der Formel HO(Alk"-O)_{q}-R^{a}, worin q, Alk" und R^{a} die zuvor genannten Bedeutungen aufweisen, sowie Diester monoethylenisch ungesättigter Di-C₄-C₈-carbonsäuren, insbesondere der Maleinsäure, der Fumarsäure, der Citraconsäure und der Itaconsäure, mit Alkoholen der Formel HO(Alk"-O)_{q}-R^{a}. Besonders bevorzugte Monomere M4 sind die Ester monoethylenisch ungesättigter Mono-C₃-C₈-carbonsäuren, insbesondere der Acrylsäure und der Methacrylsäure.

Vorzugsweise machen die Monomere M4 nicht mehr als 80 mol-%, insbesondere nicht mehr als 60 mol-%, bezogen auf die Gesamtmenge der Monomere M, aus. In einer bevorzugten Ausführungsform der Erfindung beträgt der Anteil der Monomere M4 5 bis 80 mol-% insbesondere 10 bis 60 mol-%, bezogen auf die Gesamtmenge der Monomere M in den Herstellungsverfahren i) bzw. ii). In einer anderen Ausführungsform der Erfindung beträgt ihr Anteil an den Monomeren M weniger als 5 mol-% insbesondere weniger als 1 mol-%. Bezüglich des Molverhältnisses von Monomeren M1 zu M4 bzw. von Monomeren M3 zu M4 gilt das zuvor für das Molverhältnis der funktionellen Gruppen A:C gesagte in analoger Weise.

Zu den Monomeren M5 zählen die Monomere M5a, M5b, M5c, M5d und M5e:

| | |
|---|---|
| M5a | C₁-C₁₀-Alkylester und C₅-C₁₀-Cycloalkylester monoethylenisch ungesättigter Mono-C₃-C₈-carbonsäuren, insbesondere der Acrylsäure und der Methacrylsäure, mit C₁-C₁₀-Alkanolen oder C₃-C₁₀-Cycloalkanolen wie Methylacrylat, Ethylacrylat, n-Propylacrylat, iso-Propylacrylat, n-Butylacrylat, iso-Butylacrylat tert.-Butylacrylat, n-Hexylacrylat, 2-Ethylhexylacrylat, Cyclohexylacrylat und die entsprechenden Methacrylsäureester, und entsprechende Di-C₁-C₁₀-Alkylester und Di-C₅-C₁₀-Cycloalkylester monoethylenisch ungesättigter Di-C₄-C₈-carbonsäuren; |
| M5b | Hydroxy-C₂-C₁₀-alkylester monoethylenisch ungesättigter Mono- und Di-C₃-C₈-carbonsäuren, insbesondere der Acrylsäure und der Methacrylsäure wie 2-Hydroxy-ethylacrylat, 3-Hydroxypropylacrylat, 4-Hydroxybutylacrylat, 2-Hydroxyethylmeth-acrylat, 3-Hydroxypropylmethacrylat und 4-Hydroxybutylmethacrylat, |
| M5c | monoethylenisch ungesättigte Nitrile wie Acrylnitril, |
| M5d | vinylaromatische Monomere wie Styrol und Vinyltoluole, |
| M5e | Olefine mit vorzugsweise 2 bis 12 C-Atomen wie Ethylen, Propen, 1-Buten, Isobuten, 1-Hexen, Diisobuten, 1-Octen, 1-Decen, 1-Dodecen etc. |

Bevorzugte Monomere M5 sind die Monomere M5b.

Vorzugsweise machen die Monomere M5 nicht mehr als 30 mol-%, insbesondere nicht mehr als 20 mol-%, bezogen auf die Gesamtmenge der Monomere M, aus. Sofern erwünscht, beträgt ihr Anteil in der Regel 1 bis 30 mol-% insbesondere 5 bis 20 mol-% der Monomere M im Herstellungsverfahren i) bzw. ii). Insbesondere ist ihr Anteil an den Monomeren M weniger als 5 mol-% insbesondere weniger als 1 mol-%.

Bei dem Verfahren i) ergibt sich das Molverhältnis von Seitenketten A zu funktionellen Gruppen B, gegebenenfalls C und C' üblicherweise direkt aus dem Molverhältnis der Monomere M1 zu den Monomeren M2 bzw. aus dem Molverhältnis der Monomere M1:M2:M4:M5. Dementsprechend liegt das Molverhältnis M1:M2 bzw. (M1+M4):M2 im Falle von einwertigen Säuren in der Regel im Bereich von 2:1 bis 1:20, insbesondere im Bereich von 1:1 bis 1:10 uns speziell im Bereich von 1:1,1 bis 1:8. Sofern die Monomere M im Herstellungsverfahren i) Monomere M2 mit mehr als einer Säuregruppe oder Monomere M3 umfassen ergibt sich das Molverhältnis der Monomere in entsprechender Weise.

Dementsprechend beträgt die Menge der Monomere M1 im Herstellungsverfahren i) typischerweise 5 bis 65 mol-%, insbesondere 10 bis 50 mol-% und die Menge der Monomere M2 35 bis 95 mol-%, insbesondere 50 bis 90 mol-%, wobei der Anteil etwaiger weiterer Monomere M3 bzw. M5, bis zu 30 mol-%, insbesondere bis zu 20 mol-% betragen kann und der Anteil der Monomere M4 bis zu 80 mol-%, insbesondere bis zu 60 mol-%, z. B. 5 bis 80 mol-%, insbesondere 10 bis 60 mol-%, jeweils bezogen auf die Gesamtmolzahl der Monomere M, betragen kann, wobei sich selbstredend die Molzahlen aller Monomere M auf 100 mol-% addieren, soweit nichts anderes angegeben ist.

Bei dem Verfahren ii) ergibt sich das Molverhältnis von Seitenketten A zu funktionellen Gruppen B in zu dem Verfahren i) analoger Weise aus dem Molverhältnis der Monomere M3 zu den gegebenenfalls eingesetzten Monomeren M2 oder M1 oder M4. Entsprechendes gilt für den Zusammenhang zwischen dem Molverhältnis von Seitenketten A zu Seitenketten C bzw. zu funktionellen Gruppen B.

Dementsprechend beträgt die Menge der Monomere M3 im Herstellungsverfahren ii) typischerweise 40 bis 100 mol-%, insbesondere 50 bis 95 mol-% und die Menge der Monomere M2 0 bis 60 mol-%, insbesondere 5 bis 50 mol-%, wobei die Molzahl etwaiger weiterer Monomere M2 oder M5, bis zu 30 mol-%, insbesondere bis 20 mol-% betragen kann und der Anteil der Monomere M4 bis zu 80 mol-%, insbesondere bis zu 60 mol-%, z. B. 5 bis 80 mol-%, insbesondere 10 bis 60 mol-%, jeweils bezogen auf die Gesamtmolzahl der Monomere M, betragen kann, wobei sich selbstredend die Molzahlen aller Monomere M auf 100 mol-% addieren, soweit nichts anderes angegeben ist.

Außerdem kann es zur Erhöhung des Molekulargewichts der Polymerisate zweckmäßig sein, die Polymerisation der Monomere M in Gegenwart von geringen Mengen an mehrfach ethylenisch ungesättigten Monomeren mit z. B. 2, 3 oder 4 polymerisierbaren Doppelbindungen durchzuführen (Vernetzer). Beispiele hierfür sind Diester und Triester ethylenisch ungesättigter Carbonsäuren, insbesondere die Bis- und Trisacrylate von Diolen oder Polyolen mit 3 oder mehr OH-Gruppen, z. B. die Bisacrylate und die Bismethacrylate von Ethylenglykol, Diethylenglykol, Triethylenglykol, Neopentylglykol oder Polyethylenglykolen. Derartige Vernetzer werden, sofern erwünscht, in einer Menge von in der Regel 0,01 bis 5 Gew.-% bezogen auf die Gesamtmenge der zu polymerisierenden Monomere M eingesetzt. Vorzugsweise werden weniger als 0,01 Gew.-% und insbesondere keine Vernetzermonomere eingesetzt.

Die Polymerisation der Monomere M erfolgt üblicherweise in Gegenwart von Radikale bildenden Verbindungen, so genannte Initiatoren. Derartige Verbindungen werden üblicherweise in Mengen bis zu 30 Gew.-%, vorzugsweise 0,05 bis 15 Gew.-%, insbesondere 0,2 bis 8 Gew.-%, bezogen auf die zu polymerisierenden Monomere eingesetzt. Bei aus mehreren Bestandteilen bestehenden Initiatoren (Initiatorsysteme z. B. bei Redox-Initiatorsystemen) beziehen sich die vorstehenden Gewichtsangaben auf die Summe der Komponenten.

Geeignete Initiatoren sind beispielsweise organische Peroxide und Hydroperoxide, weiterhin Peroxodisulfate, Percarbonate, Peroxidester, Wasserstoffperoxid und Azoverbindungen. Beispiele für Initiatoren sind Wasserstoffperoxid, Dicyclohexylperoxidicarbonat, Diacetylperoxid, Di-tert.-butylperoxid, Diamylperoxid, Dioctanoylperoxid, Didecanoylperoxid, Dilauroylperoxid, Dibenzoylperoxid, Bis(o-toluyl)peroxid, Succinylperoxid, Methylethylketonperoxid, Di-tert.-Butylhydroperoxid, Acetylacetonperoxid, Butylperacetat, tert.-Butylpermaleinat, tert.-Butylperisobutyrat, tert.-Butylperpivalat, tert.-Butylperoctoat, tert.-Butylperneodecanoat, tert.-Butylperbenzoat, tert.-Butylhydroperoxid, Cumolhydroperoxid, tert.-Butylperneodecanoat, tert.-Amylperpivalat, tert.-Butylperpivalat, tert.-Butyl-perbenzoat, tert.-Butylperoxi-2-ethylhexanoat und Diisopropylperoxidicarbamat; weiterhin Lithium-, Natrium-, Kalium- und Ammoniumperoxodisulfat, Azoinitiatoren 2,2'-Azobis-isobutyronitril, 2,2'-Azobis(2-methylbutyronitril), 2,2'-Azobis[2-methyl-N-(-2-hydroxyethyl)propionamid, 1,1'-Azobis(1-cyclohexancarbonitril), 2,2'-Azobis(2,4-dimethylvaleronitril), 2,2'-Azobis(N,N'-dimethylenisobutyroamidin)dihydrochlorid, und 2,2'-Azobis(2-amidinopropan)dihydrochlorid. sowie die im Folgenden erläuterten Redox-Initiatorsysteme.

Redox-Initiatorsysteme enthalten mindestens eine peroxidhaltige Verbindung in Kombination mit einem Redox-Coinitiator, z. B. ein reduzierend wirkende Schwefelverbindung, z. B. Bisulfite, Sulfite, Thiosulfate, Dithionite und Tetrathionate von Alkalimetallen oder von Ammoniumverbindungen. So kann man Kombinationen von Peroxodisulfaten mit Alkalimetall- oder Ammoniumhydrogensulfiten einsetzen, z. B. Ammoniumperoxodisulfat und Ammoniumdisulfit. Die Menge der peroxidhaltigen Verbindung zum Redox-Coinitiator beträgt 30:1 bis 0,05:1.

Die Initiatoren können allein oder in Mischung untereinander angewendet werden, z. B. Mischungen aus Wasserstoffperoxid und Natriumperoxodisulfat.

Die Initiatoren können sowohl wasserlöslich als auch in Wasser nicht oder nur geringfügig löslich sein. Für die Polymerisation in wässrigem Medium werden bevorzugt wasserlösliche Initiatoren eingesetzt, d. h. Initiatoren, die in der zur Polymerisation üblicherweise eingesetzten Konzentration im wässrigen Polymerisationsmedium löslich sind. Hierzu zählen Peroxodisulfate, Azoinitiatoren mit ionischen Gruppen, organische Hydroperoxide mit bis zu 6 C-Atomen, Acetonhydroperoxid, Methylethylketonhydroperoxid und Wasserstoffperoxid, sowie die vorgenannten Redoxinitiatoren. In einer besonders bevorzugten Ausführungsform der Polymerisationsverfahren i) bzw. ii) umfasst der eingesetzte Initiator wenigstens ein Peroxodisulfat, z. B. Natriumperoxodisulfat.

In Kombination mit den Initiatoren bzw. den Redoxinitiatorsystemen können zusätzlich Übergangsmetallkatalysatoren eingesetzt werden, z. B. Salze von Eisen, Kobalt, Nickel, Kupfer, Vanadium und Mangan. Geeignete Salze sind z. B. Eisen (II)sulfat, Kobalt(II)chlorid, Nickel(II)sulfat, oder Kupfer(I)chlorid. Bezogen auf die Monomeren wird das reduzierend wirkende Übergansmetallsalz in einer Konzentration von 0,1 ppm bis 1000 ppm eingesetzt. So kann man Kombinationen von Wasserstoffperoxid mit Eisen(II)-Salzen einsetzen, wie beispielsweise 0,5 bis 30 % Wasserstoffperoxid und 0,1 bis 500 ppm Mohrsches Salz.

Auch bei der Polymerisation der Monomere M in organischen Lösungsmitteln können in Kombination mit den oben genannten Initiatoren Redox-Coinitiatoren und/oder Übergangsmetallkatalysatoren mitverwendet werden, z. B. Benzoin, Dimethylanilin, Ascorbinsäure sowie in organischen Lösungsmitteln lösliche Komplexe von Schwermetallen, wie Kupfer, Cobalt, Eisen, Mangan, Nickel und Chrom. Die üblicherweise verwendeten Mengen an Redox-Coinitiatoren bzw. Übergansmetallkatalysatoren betragen etwa 0,1 bis 1000 ppm, bezogen auf die eingesetzten Mengen an Monomeren.

Um das mittlere Molekulargewicht der erfindungsgemäß erhältlichen Kammpolymere zu steuern, ist es oft zweckmäßig, die Polymerisation der Monomere M in Gegenwart von Reglern durchzuführen. Hierfür können übliche Regler verwendet werden, insbesondere organische SH-Gruppen enthaltende Verbindungen, insbesondere wasserlösliche SH-Gruppen enthaltende Verbindungen wie 2-Mercaptoethanol, 2-Mercaptopropanol, 3-Mercaptopropionsäure, Cystein, N-Acetylcystein, weiterhin Phosphor(III)- oder Phosphor(I)-Verbindungen wie Alkalimetall- oder Erdalkalimetallhypophosphite, z. B. Natriumhypophosphit, sowie Hydrogensulfite wie Natriumhydrogensulfit. Die Polymerisationsregler werden im Allgemeinen in Mengen von 0,05 bis 10 Gew.-%, insbesondere 0,1 bis 2 Gew.-%, bezogen auf die Monomere M, eingesetzt. Bevorzugte Regler sind die vorgenannten SH-Gruppen tragenden Verbindungen, insbesondere wasserlösliche SH-Gruppen tragende Verbindungen wie 2-Mercaptoethanol, 2-Mercaptopropanol, 3-Mercaptopropionsäure, Cystein und N-Acetylcystein. Bei diesen Verbindungen hat es sich besonders bewährt, diese in einer Menge von 0,05 bis 2 Gew.-%, insbesondere 0,1 bis 1 Gew.-%, bezogen auf die Monomere einzusetzen. Die vorgenannten Phosphor(III)- und Phosphor(I)-Verbindungen sowie die Hydrogensulfite wird man üblicherweise in größeren Mengen z. B. 0,5 bis 10 Gew.-% und insbesondere 1 bis 8 Gew.-%, bezogen auf die zu polymerisierenden Monomere einsetzen. Auch durch die Wahl des geeigneten Lösungsmittels kann auf das mittlere Molekulargewicht Einfluss genommen werden. So führt die Polymerisation in Gegenwart von Verdünnungsmitteln mit benzylischen oder allylischen H-Atomen zu einer Verringerung des mittleren Molekulargewichtes durch Kettenübertragung.

Die Polymerisation der Monomere kann nach den üblichen Polymerisationsverfahren erfolgen, einschließlich Lösungs-, Fällungs-, Suspensions- oder Substanzpolymerisation erfolgen. Bevorzugt ist die Methode der Lösungspolymerisation, d. h. die Polymerisation in Lösungs- oder Verdünnungsmitteln.

Zu den geeigneten Lösungs- oder Verdünnungsmitteln zählen sowohl aprotische Lösungsmittel, z. B. die vorgenannten Aromaten wie Toluol, o-Xylol, p-Xylol, Cumol, Chlorbenzol, Ethylbenzol, technischen Mischungen von Alkylaromaten, Aliphaten und Cycloaliphaten wie Cyclohexan und technischen Aliphatenmischungen, Ketone wie Aceton, Cyclohexanon und Methylethylketon, Ether wie Tetrahydrofuran, Dioxan, Diethylether, tert.-Butylmethylether, und C₁-C₄-Alkylester aliphatischer C₁-C₄-Carbonsäuren wie Essigsäuremethylester und Essigsäureethylester, weiterhin protische Lösungsmittel wie Glykole und Glykolderivate, Polyalkylenglykole und deren Derivate, C₁-C₄-Alkanole, z. B. n-Propanol, n-Butanol, Isopropanol, Ethanol oder Methanol, sowie Wasser und Mischungen von Wasser mit C₁-C₄-Alkanolen wie z. B. Isopropanol/Wasser-Mischungen. Vorzugsweise erfolgt das erfindungsgemäße Copolymerisationsverfahren in Wasser oder einer Mischung aus Wasser mit bis zu 60 Gew.-% an C₁-C₄-Alkanolen oder Glykolen als Lösungs- oder Verdünnungsmittel. Besonders bevorzugt wird Wasser als alleiniges Lösungsmittel eingesetzt.

Die Polymerisation der Monomere M wird bevorzugt unter weitgehendem oder vollständigem Ausschluss von Sauerstoff, vorzugsweise in einem Inertgasstrom, z. B. einem Stickstoffstrom, durchgeführt.

Das Polymerisationsverfahren der Monomere M kann in den für Polymerisationsmethoden üblichen Apparaturen durchgeführt werden. Hierzu zählen Rührkessel, Rührkesselkaskaden, Autoklaven, Rohrreaktoren und Kneter.

Die Polymerisation der Monomere M erfolgt üblicherweise bei Temperaturen im Bereich von 0 bis 300 °C, vorzugsweise im Bereich von 40 bis 120 °C. Die Polymerisationsdauer liegt üblicherweise im Bereich von 0,5 h bis 15 h und insbesondere im Bereich von 2 bis 6 h. Der bei der Polymerisation herrschende Druck ist für den Erfolg der Polymerisation von untergeordneter Bedeutung und liegt in der Regel im Bereich von 800 mbar bis 2 bar und häufig bei Umgebungsdruck. Bei Einsatz leichtflüchtiger Lösungsmittel oder leichtflüchtiger Monomere kann der Druck auch höher sein.

Wegen weiterer Details zum Polymerisationsverfahren wird auf die EP-A 560 602, EP-A 734 359, EP-A 799 807, EP-A 994 290, WO 01/40337, WO 01/40338 und PCT/EP 2005/009466 Bezug genommen. Die dort beschriebenen Polymerisationsbedingungen können in analoger Weise zur Herstellung der erfindungsgemäßen Kammpolymere eingesetzt werden.

Bei den Monomere M2, M4 und M5 handelt es sich um bekannte Verbindungen, die überwiegend kommerziell erhältlich sind.

Die Monomere M1 bzw. M3 wurden teilweise bereits im Stand der Technik beschrieben, wobei die Monomere M1 bzw. M3, worin n in Gruppe A im Mittel für eine Zahl im Bereich von 10 bis 300, insbesondere im Bereich von 20 bis 200, speziell im Bereich von 50 bis 200 und ganz speziell im Bereich von 50 bis 150 steht und worin wenigstens 90 mol-% der Wiederholungseinheiten Alk-O in der Gruppe A für CH₂CH₂O stehen, neu sind und einen weiteren Gegenstand der vorliegenden Erfindung bilden. Ihre Herstellung kann in Analogie zu bekannten Verfahren des Standes der Technik erfolgen. Bezüglich statistischer und blockweiser Anordnung verschiedener Einheiten Alk-O gilt das zuvor für die Gruppe A Gesagte.

Die Herstellung von ethylenisch ungesättigten Ethern oder Aminen, also Monomeren M1 mir einer Gruppe A, worin k = 0 ist, kann durch Veretherung oder Vinylierung von Alkoholen der Formel HO-(Alk-O)ₙ-Y-Z oder durch Alkenylierung oder Enamin-Bidlung von Aminen der Formel HNR-(Alk-O)ₙ-Y-Z in Analogie zu Standardmethoden des Standes der Technik erfolgen.

Die Monomere M3 können in Analogie zu den hier für die Monomere M1 beschriebenen Methoden hergestellt werden.

Sofern die Polymerisation der Monomere M als Lösungspolymerisation in Wasser durchgeführt wird, ist für viele Anwendungszwecke eine Entfernung des Wassers nicht erforderlich. Im übrigen kann eine Isolierung des erfindungsgemäß erhältlichen Polymerisats in an sich üblicher Weise durchgeführt werden, z. B. durch Sprühtrocknung des Polymerisationsgemischs. Wird die Polymerisation in einem wasserdampfflüchtigen Lösungsmittel oder Lösungsmittelgemisch durchgeführt, so kann man das Lösungsmittel durch Einleiten von Wasserdampf entfernen, wodurch man eine wässrige Lösung oder Dispersion des Kammpolymers erhält.

Bevorzugt werden die Kammpolymere in Form einer wässrigen Dispersion oder Lösung gewonnen. Der Feststoffgehalt beträgt vorzugsweise 10 bis 80 Gew.-%, insbesondere 30 bis 65 Gew.-%.

Unter Zement ist beispielsweise Portlandzement, Tonerdezement oder vermischter Zement, wie beispielsweise Puzzolanzement, Schlackenzement oder andere Typen zu verstehen. Insbesondere eignen sich die erfindungsgemäßen Kammpolymere für Zementmischungen, die als Zementbestandteile überwiegend und insbesondere zu wenigstens 80 Gew.-%, bezogen auf den Zementbestandteil, Portlandzement enthalten. Die erfindungsgemäßen Kammpolymere werden hierzu in der Regel in einer Menge von 0,001 bis 0,1 Gew.-%, vorzugsweise 0,01 bis 0,05 Gew.-%, bezogen auf das Gesamtgewicht des Mahlgutes eingesetzt.

Die Kammpolymere können in fester Form oder als wässrige Lösung zu den zementhaltigen Zubereitungen gegeben werden. Vorzugsweise wird das Kammpolymer in flüssiger, d. h. gelöster emulgierter oder suspendierter Form, beispielsweise in Form der Polymerisationslösung dem Mahlgut zugesetzt werden.

Die folgenden Beispiele sollen die Erfindung verdeutlichen.

### Analytik:

### a) Bestimmung des K-Wertes:

Die K-Werte der wässrigen Natriumsalzlösungen der Copolymerisate wurden nach H. Fikentscher, Cellulose-Chemie, Band 13, 58-64 und 71-74 (1932) in wässriger Lösung bei einem pH-Wert von 7, einer Temperatur von 25 °C und einer Polymerkonzentration des Natriumsalzes des Copolymerisats von 1 Gew.-% bestimmt.

### b) Bestimmung des Feststoffgehaltes:

Die Bestimmung erfolgt mittels dem Analysengerät MA30 der Firma Satorius. Hierzu wird in eine Aluminiumschale eine definierte Menge der Probe (ca. 0,5 bis 1 g) eingewogen und bis zur Gewichtskonstanz bei 90 °C getrocknet. Der prozentuale Feststoffgehalt (FG) errechnet sich wie folgt: FG = Auswaage x 100/Einwaage [Gew.-%].

### c) Molekulargewichtsbestimmung:

Die Bestimmung der zahlenmittleren und gewichtsmittleren Molekulargewichtes erfolgte durch Gel-Permeations- Chromatographie (=GPC) mit wässrigen Elutionsmitteln.

Die GPC wurde mit einer Gerätekombination der Firma Agilent (Serie 1100) durchgeführt. Diese umfasst:

| | |
|---|---|
| Begaser | Modell G 1322 A |
| Isokratische Pumpe | Modell G 1310 A |
| Autosampler | Modell G 1313 A |
| Säulenofen | Modell G 1316 A |
| Steuermodul | Modell G 1323 B |
| Differentialrefraktometer | Modell G 1362 A |

Als Eluent dient im Falle von in Wasser gelösten Polymeren ein 0,08 mol/L TRIS-Puffer (pH=7,0) in destilliertem Wasser + 0,15 mol/L Chlorid-Ionen aus NaCl und HCl.

Die Trennung fand in einer Trennsäulenkombination statt. Verwendet werden die Säulen Nr. 787 und 788 (je 8 x 30 mm) der Firma PSS mit Trennmaterial GRAL BIO linear. Die Durchflussgeschwindigkeit betrug 0,8 mL/min bei einer Säulen-Temperatur von 23 °C.

Die Kalibrierung erfolgt mit Polyethylenoxid-Standards der Fa. PPS mit Molekulargewichten von M = 194 - 1700000 [mol/g].

### Beispiel 1 (nicht erfindungsgemäß)

In einem 2 Liter fassenden Reaktor, der mit Rührer und einer Destillationsbrücke ausgestattet war, wurden 478 g Methylpolyethylenglykol der Molmasse 1000 , 167 g Methacrylsäure, 6,5 g p-Toluolsulfonsäure und 0,17 g Phenothiazin vorgelegt. Die Mischung wurde unter Durchleiten von Stickstoff 2 Stunden auf 120 °C erhitzt. Dann wurde im Vakuum bei 120 mbar 30 Minuten lang eine Mischung aus 3,3 g Wasser und 1,5 g Methacrylsäure abdestilliert. Danach wurde das Vakuum mit Stickstoff aufgehoben. Die Mischung wurde für weitere 2 Stunden unter Stickstoff gerührt. Anschließend wurde der Druck wieder für 30 Minuten auf 100 mbar reduziert. Dann wurde eine Mischung aus 2,9 g Wasser und 1,5 g Methacrylsäure abdestilliert. Das Vakuum wurde mit Stickstoff aufgehoben und die Veresterung unter Rühren für weitere 2 Stunden fortgesetzt. Der Druck wurde wieder auf 100 mbar reduziert, und eine Mischung aus 0,2 g Wasser und 0,2 g Methacrylsäure wurde abdestilliert. Dann wurde das Vakuum mit Stickstoff aufgehoben.

### Beispiel 2 (nicht erfindungsgemäß)

Wie Beispiel 1, jedoch eingesetzt als sprühgetrocknetes Polymerpulver.

### Untersuchung der Mahlhilfsmittel

Die Wirkung verschiedener Additive auf den Energieeintrag beim Aufmahlen eines Zementklinkers wurde analysiert.

Dazu wurde eine handelsübliche Rohrkugelmühle mit zwei Mahlkammern die im geschlossenen Kreislauf arbeitete und einen handelüblichen Portlandzement produzierte, untersucht. Die technischen Informationen einer solchen Rohrkugelmühle finden sich in ZKG International (Volume53), No 10/2000, S. 572 Tabelle 1.

Der Füllgrad der Mahlkörper und die Belüftung der Mühle wurden nicht variiert.

Es wurden jeweils 0,02 bzw. 0,06 Gew.-% des zu untersuchenden Zusatzes (relativ zum Mahlgut) auf Klinkermaterial für die Herstellung eines handelsüblichen Portlandzementes aufgesprüht und 4 bis 8 Stunden gemahlen. Zu verschiedenen Zeiten wurden Proben entnommen und die massebezogene Oberfläche nach Blaine in cm²/g bestimmt. Im Vergleich zur unmodifizierten Probe sind die Messgrößen "erzeugte Oberfläche bei konstanter Mahlzeit bzw. konstantem Energieeintrag" sowie "Mahlzeit bzw. Energieeintrag zur Erzeugung einer definierten Oberfläche" der Energieeinsparung proportionale Maßzahlen.

**Tabelle 1**

| Technische Parameter der Versuchsmühle | |
|---|---|
| Mühlenbauart | Rohrmühle mit zwei Kammern |
| Mühlengrösse | Ø 4,0 m x Länge 13,0 m |
| Größe der 1. Mühlenkammer | Ø 3,7 m x Länge 4,0 m |
| Größe der 2. Mühlenkammer | Ø 3,7 m x Länge 8,2 m |
| Art des Sichters | Sturtevant, 1. Generation |

| Erste Mühlkammer | |
|---|---|
| Kugelmaterial | Chromguss 550 HB |
| Kugelvolumen | 43,3 m³ |
| Füllgrad | 27,5 % |
| Kugeln Gattung 1 | Ø 90 mm x 18,0 mm |
| Kugeln Gattung 2 | Ø 80 mm x 18,0 mm |
| Kugeln Gattung 3 | Ø 70 mm x 17,0 mm |
| Kugeln Gattung 4 | Ø 60 mm x 17,0 mm |
| Durchschn. Kugeldurchmesser | 75,3 mm |
| Dichte der Kugeln | 4,445 kg/dm³ |
| Gesamtmasse der Kugeln | 70,0 t |

| Zweite Mühlenkammer | |
|---|---|
| Kugelmaterial | Chromguss 600 HB |
| Kugelvolumen | 88,5 m³ |
| Füllgrad | 31,8 % |
| Kugeln Gattung 1 | Ø 50 mm x 17,25 mm |
| Kugeln Gattung 2 | Ø 40 mm x 17,29 mm |
| Kugeln Gattung 3 | Ø 30 mm x 32,78 mm |
| Kugeln Gattung 4 | Ø 25 mm x 34,0 mm |
| Kugeln Gattung 5 | Ø 20 mm x 34,0 mm |
| Durchschn. Kugeldurchmesser | 32,9 mm |
| Dichte der Kugeln | 4,810 kg/dm³ |
| Gesamtmasse der Kugeln | 135,32 t |

**Tabelle 2**

| Versuchsergebnisse | | | | | |
|---|---|---|---|---|---|
| Mahldauer [min] | ohne Mahlhilfsmittel [Oberfläche nach Blaine in cm²/g] | 0,02 % Beispiel 1 [Oberfläche nach Blaine in cm²/g]; | 0,06 % Beispiel 1 [Oberfläche nach Blaine in cm²/g] | 0,02 % Beispiel 2 [Oberfläche nach Blaine in cm²/g] | 0,06 % Beispiel 2 [Oberfläche nach Blaine in cm²/g] |
| 30 | 1345 | 1510 | 1650 | 1490 | 1475 |
| 60 | 2015 | 2230 | 2445 | 2480 | 2305 |
| 90 | 2530 | 2525 | 3010 | 2730 | 2650 |
| 120 | 2740 | 2785 | 3250 | 2960 | 2965 |
| 150 | 3195 | 2950 | 3510 | 3160 | 3165 |
| 180 | 3450 | 3290 | 3700 | 3335 | 3380 |
| 210 | 3655 | 3320 | 4085 | 3680 | 3635 |
| 240 | 3850 | 3330 | 4180 | 3935 | 3785 |
| 270 | 3980 | 3700 | 4450 | 4050 | 4020 |
| 300 | 4165 | 3935 | 4625 | 4255 | 4320 |
| 330 | 4300 | 4050 | | 4405 | 4680 |
| 390 | 4560 | 4210 | | | 4990 |

Die Ergebnisse zeigen, dass durch den Zusatz der erfindungsgemäßen Mahlhilfsmittel der Energieaufwand reduziert wird. Die Bestimmung des Wasseranspruchs aller gewonnenen Zemente nach DIN 196-3 ergab, dass die in Gegenwart von Beispiel 1 und 2 gewonnenen Zemente einen signifikant geringeren Wasserbedarf besaßen und sich somit hervorragend zur Herstellung von Mörteln und Betonen mit niedriger Verarbeitungsviskosität eignen.

## Patentansprüche

1. Verwendung von Kammpolymeren, die ein Kohlenstoffrückgrat aufweisen, das Polyethergruppen der Formel A
*-U-(C(O))ₖ-X-(Alk-O)ₙ-W A
worin
* die Bindungsstelle an das Kohlenstoffrückgrat des Kammpolymers anzeigt,
U für eine chemische Bindung steht,
X Sauerstoff oder eine Gruppe NR bedeutet,
k 0 ist,
n für eine ganze Zahl steht, deren Mittelwert, bezogen auf das Kammpolymer im Bereich von 5 bis 300 liegt,
Alk für C₂-C₄-Alkylen steht, wobei Alk innerhalb der Gruppe (Alk-O)ₙ gleich oder verschieden sein kann,
W einen Wasserstoff-, einen C₁-C₆-Alkyl- oder einen Arylrest bedeutet oder die Gruppe Y-Z bedeutet, wobei
Y für eine lineare oder verzweigte Alkylengruppe mit 2 bis 8 C-Atomen steht, die einen Phenylring tragen kann,
Z für einen über Stickstoff gebundenen 5- bis 10-gliedrigen Stickstoffheterocyclus steht, der als Ringglieder, neben dem Stickstoffatom und neben Kohlenstoffatomen, 1, 2 oder 3 zusätzliche Heteroatome, ausgewählt unter Sauerstoff, Stickstoff und Schwefel aufweisen kann, wobei die Stickstoffringlieder eine Gruppe R' aufweisen können, und wobei 1 oder 2 Kohlenstoffringglieder als Carbonylgruppe vorliegen können,
R für Wasserstoff, C₁-C₄-Alkyl oder Benzyl steht, und
R' für Wasserstoff, C₁-C₄-Alkyl oder Benzyl steht;
sowie funktionelle Gruppen B, die bei pH >12 in Form anionischer Gruppen vorliegen, trägt,
und ihren Salzen als Mahlhilfsmittel in zementhaltigen Zubereitungen.

2. Verwendung nach Anspruch 1, wobei im Mittel wenigstens 50 mol-% der Einheiten Alk-O in der Gruppe (Alk-O)ₙ für CH₂-CH₂-O stehen.

3. Verwendung nach Anspruch 1 oder 2, **dadurch gekennzeichnet, dass** 0,001 bis 0,1 Gew.% bezogen auf das Mahlgut an Mahlhilfsmittel eingesetzt wird.

## Claims

1. Use of comb polymers having a carbon backbone which bears polyether groups of the formula A
*-U-(C(O))ₖ-X-(Alk-O)ₙ-W A
where
* indicates the bonding position to the carbon backbone of the comb polymer,
U is a chemical bond,
X is oxygen or an NR group,
k is 0,
n is an integer having an average value, based on the comb polymer, in the range from 5 to 300,
Alk is C₂-C₄-alkylene, where the Alk moieties within the group (Alk-O)ₙ can be identical or different,
W is a hydrogen radical, a C₁-C₆-alkyl radical or an aryl radical or is the group Y-Z, where
Y is a linear or branched alkylene group which has from 2 to 8 carbon atoms and can bear a phenyl ring,
Z is a 5-10-membered nitrogen heterocycle which is bound via nitrogen and can have, as ring members, 1, 2 or 3 additional heteroatoms selected from among oxygen, nitrogen and sulfur in addition to the nitrogen atom and in addition to carbon atoms, where the nitrogen ring members can bear an R' group and 1 or 2 carbon ring members can be present as a carbonyl group,
R is hydrogen, C₁-C₄-alkyl or benzyl and
R' is hydrogen, C₁-C₄-alkyl or benzyl;
and also functional groups B which at pH>12 are present in the form of anionic groups,
and salts thereof as grinding aid in cement-containing preparations.

2. Use according to Claim 1, wherein on average at least 50 mol% of the Alk-O units in the (Alk-O)ₙ group are CH₂-CH₂-O.

3. Use according to Claim 1 or 2, **characterized in that** from 0.001 to 0.1% by weight, based on the material being milled, of grinding aid is used.

## Revendications

1. Utilisation de polymères en peigne qui présentent un squelette carboné qui porte des groupes polyéther de formule A
***-U-(C(O))ₖ-X-(Alk-O)ₙ-W** **A**
dans laquelle
* indique l'emplacement de liaison au squelette carboné du polymère en peigne,
U représente une liaison chimique,
X signifie oxygène ou un groupe NR,
k est 0,
n représente un nombre entier dont la valeur moyenne, par rapport au polymère en peigne, se situe dans la plage de 5 à 300,
Alk représente C₂-C₄-alkylène, Alk pouvant être identique ou différent à l'intérieur du groupe (Alk-O)ₙ,
W signifie un radical hydrogène, un radical C₁-C₆-alkyle ou un radical aryle ou signifie le groupe Y-Z,
Y représente un groupe alkylène linéaire ou ramifié comportant 2 à 8 atomes de C qui peut porter un cycle phényle,
Z représente un hétérocycle azoté à 5 à 10 chaînons lié par l'intermédiaire de l'azote, qui peut présenter en tant qu'éléments de cycle, outre l'atome d'azote et outre les atomes de carbone, 1, 2 ou 3 hétéroatomes supplémentaires, choisis parmi l'oxygène, l'azote et le soufre, les éléments de cycle de type azote pouvant présenter un groupe R', et 1 ou 2 éléments de cycle de type carbone pouvant être présents en tant que groupe carbonyle,
R représente hydrogène, C₁-C₄-alkyle ou benzyle, et
R' représente hydrogène, C₁-C₄-alkyle ou benzyle ;
ainsi que des groupes fonctionnels B qui peuvent être présents sous forme de groupes anioniques à pH > 12,
et leurs sels en tant qu'adjuvant de broyage dans des préparations contenant un ciment.

2. Utilisation selon la revendication 1, en moyenne au moins 50 % en moles des motifs Alk-O dans le groupe (Alk-O)ₙ représentant CH₂-CH₂-O.

3. Utilisation selon la revendication 1 ou 2, **caractérisée en ce que** 0,001 à 0,1 % en poids d'adjuvant de broyage est utilisé par rapport à la matière à broyer.
